# EUROPEAN PATENT APPLICATION

(11) **EP 2 189 902 A1**
(43) Date of publication of application: **26.05.2010**
(21) Application number: 08777518.5
(22) Date of filing: 23.06.2008
(51) Int. Cl.: G06F 9/445, G06F 9/44

(54) **INFORMATION PROCESSOR**

(30) Priority: 12.09.2007 JP 2007236673
(71) Applicant: Mitsubishi Electric Corporation, Chiyoda-ku Tokyo 100-8310 (JP)
(72) Inventor: KANEDA, Norihisa, Tokyo 100-8310 (JP)
(74) Representative: Pfenning, Meinig & Partner GbR
(86) International application number: PCT/JP2008/061407
(87) International publication number: WO 2009/034760

(57) **Abstract**

A virtual machine is efficiently constructed, and a constructing time is reduced. Other than a target virtual machine which is a target for setting parameters, a setting purpose virtual machine (16) is provided, and without starting the target virtual machine, a host side virtual machine setting unit (12) of a host (4) obtains a target virtual machine setting parameter file (5), and makes a storage area for setting parameters of the target virtual machine (a target virtual machine data (8)) accessible from the setting purpose virtual machine (16), and a guest side virtual machine setting unit (18) sets the parameters of the target virtual machine without starting the target virtual machine by obtaining the target virtual machine setting parameter file (5) from the host side virtual machine setting unit (12), and writing the setting parameters in the storage area for setting the parameters of the target virtual machine (the target virtual machine data (8)) which has been made accessible.

## Description

### Technical Field

The present invention relates to technique to efficiently carry out setting of a virtual machine.

### Background Art

When constructing a virtual machine, normally, after generating the virtual machine, installation of a guest OS (Operating System), setting of the guest OS, installation of applications, and setting of the applications, etc. are carried out.
Once the virtual machine is generated, it is possible to construct a new virtual machine by copying using an image of the virtual machine.
The following shows a constructing method of the virtual machine in this case:
(1) copy virtual machine data (image files, for example) to a storage of a target server;
(2) start a virtual machine using the copied virtual machine data; and
(3) carry out setting (setting of a license, a host name, an IP address, applications, and other setting items) on the started virtual machine.

Like the above, it is necessary to carry out the setting on the virtual machine after starting the copied virtual machine.
As a method to carry out the setting without starting the copied virtual machine, there is a method to construct the virtual machine by preparing a number of setting image files and combining with master image files (Patent Document 1).
This provides a virtual machine management system which manages an environment where a plurality of virtual machines operate and which can immediately reconstruct the environment when necessary.
Patent Document 1: JP2005-332223A

### Disclosure of the Invention

### Problems to be Solved by the Invention

It is considered that a number of products mounting the virtual machines are produced.
Since a license, or a host name must be set to a different value, it is necessary to carry out the setting individually for each machine in addition to copying the virtual machine data to the target server.
When carrying out the setting in a conventional manner, the individual setting has to be done after starting the target virtual machine separately, thus, there is a problem that the conventional manner is inefficient. In particular, if the OS of the target virtual machine is heavy and it takes long to start, the operation efficiency becomes worse.
Further, when the setting is done using the setting image files as shown in Patent Document 1, there is another problem that a number of setting image files have to be prepared individually for each product.
Further, an application to be installed or setting may vary for each product model. In this case, after a virtual machine is generated according to the model, it is necessary to install the OS, set parameters, and install necessary applications. Because of this, the setting should be done individually for each model and there is a problem that the conventional manner is inefficient.

The present invention mainly aims to solve the above-discussed problems; and a main object of the invention is to construct the virtual machine efficiently and reduce the time to construct.

### Means to Solve the Problems

According to the present invention, an information processing apparatus setting a parameter of a virtual machine includes:
a storage device storing a setting parameter to be set for a target virtual machine which is a target for setting the parameter and having a storage area for setting the parameter of the target virtual machine;
a host having a host OS (Operating System) and a host side virtual machine setting unit which operates on the host OS; and:
   a setting purpose virtual machine, being a virtual machine different from the target virtual machine, having a guest OS and a guest side virtual machine setting unit which operates on the guest OS, and
   without starting the target virtual machine,
   the host side virtual machine setting unit of the host obtains the setting parameter from the storage device, and makes the storage area for setting the parameter of the target virtual machine accessible from the setting purpose virtual machine, and
   the guest side virtual machine setting unit of the setting purpose virtual machine obtains the setting parameter from the host side virtual machine setting unit of the host, writes the setting parameter in the storage area for setting the parameter of the target virtual machine which has been made accessible by the host side virtual machine setting unit of the host, and sets the parameter of the target virtual machine.

The storage device stores a script in which the setting parameter is written, and the guest side virtual machine setting unit of the setting purpose virtual machine obtains the script from the host side virtual machine setting unit of the host, executes the script, and writes the setting parameter in the storage area for setting the parameter of the target virtual machine.

The information processing apparatus further includes:
a virtual machine copying unit for copying the virtual machine;
the storage device stores a setting parameter to be set for a copied target virtual machine copied by the virtual machine copying unit and has a storage area for setting the parameter of the copied target virtual machine;
without starting the copied target virtual machine,
the host side virtual machine setting unit of the host obtains the setting parameter of the copied target virtual machine from the storage device, and makes the storage area for setting the parameter of the copied target virtual machine accessible from the setting purpose virtual machine, and
the guest side virtual machine setting unit of the setting purpose virtual machine obtains the setting parameter of the copied target virtual machine from the host side virtual machine setting unit of the host, writes the setting parameter in the storage area for setting the parameter of the copied target virtual machine which has been made accessible by the host side virtual machine setting unit of the host, and sets the parameter of the copied target virtual machine.

The information processing apparatus further includes:
a load evaluating purpose virtual machine for carrying out a processing to apply a load to a hardware resource;
a resource monitor for monitoring the load applied to the hardware resource by the processing of the load evaluating purpose virtual machine; and
a load evaluating unit for comparing a monitored value by the resource monitor with a threshold value, if the monitored value is equal to or less than the threshold value, starting a new load evaluating purpose virtual machine, and if the monitored value exceeds the threshold value, deciding a virtual machine operable limit number based on a number of currently operating load evaluating purpose virtual machine.

According to the present invention , an information processing apparatus setting a parameter of a virtual machine includes:
a storage device storing a setting parameter to be set for a target virtual machine which is a target for setting the parameter and having a storage area for setting the parameter of the target virtual machine; and
a host having a host OS (Operating System) and a virtual machine setting unit operating on the host OS, and
without starting the target virtual machine,
the virtual machine setting unit of the host obtains the setting parameter from the storage device, makes the storage area for setting the parameter of the target virtual machine accessible, writes the setting parameter in the storage area for setting the parameter of the target virtual machine which has been made accessible, and sets the parameter for the target virtual machine.

### Effect of the Invention

According to the present invention, since the setting of the target machine can be done without starting the target virtual machine, it is possible to efficiently carry out the setting compared with a case of actually starting the target virtual machine.
Further, the setting is done by executing scripts on which setting parameters are written, so that there is no need to prepare a number of setting purpose image files.

### Preferred Embodiments for Carrying out the Invention

Embodiment 1.
Before explaining a detail of a setting method of a virtual machine using a server apparatus (an information processing apparatus) related to the present embodiment, an outline of a setting method of the virtual machine related to the present embodiment will be explained first.

In the present embodiment, setting of the virtual machine is not done by starting a target virtual machine (a virtual machine which is a target for setting parameters), but by starting a setting purpose virtual machine separately, mounting a disk of the target virtual machine on an OS (Operating System) on the setting purpose virtual machine, and rewriting the mounted files. A flow of constructing method of the virtual machine according to the present embodiment as follows:
(1) copy the virtual machine data (for example, image files) to a storage of the target server;
(2) copy the setting purpose virtual machine data (for example, image files) to a storage of the target server;
(3) prepare a setting parameter file;
(4) start the setting purpose virtual machine;
(5) mount the target virtual machine data so as to be file-accessible from the setting purpose virtual machine;
(6) carry out the setting of the target virtual machine on the setting purpose virtual machine (setting of a host name, an IP address, applications, setting items such as a license, etc.);
(7) shut down the setting purpose virtual machine; and
(8) delete the setting purpose virtual machine and the setting parameter file from the storage (if deletion is unnecessary, no deletion is acceptable).

By having necessary minimum functions in the OS of the setting purpose virtual machine, it is possible to shorten the OS starting time, and the setting can be done efficiently compared with the case in which the OS of the target virtual machine is actually started.
Since the setting can be done before starting the target virtual machine, for example, in case of setting the IP address, it is possible to avoid a problem that an error occurs because of the overlapped IP address when a certain virtual machine is copied to construct a new virtual machine, and the new virtual machine is started.
Further, if a plurality of virtual machines are set, by mounting and unmounting the target virtual machine data on the setting purpose virtual machine, it is unnecessary to restart the setting purpose virtual machine each time the target virtual machine changes, which makes the operation efficient.
Here, since the present method can be implemented without modifying the virtual machine monitor (or the host OS), the method can be applied to a virtual machine software which is commercially available.

Next, a detail of the server apparatus (the information processing apparatus) and the setting method of the virtual machine related to the present embodiment will be explained.

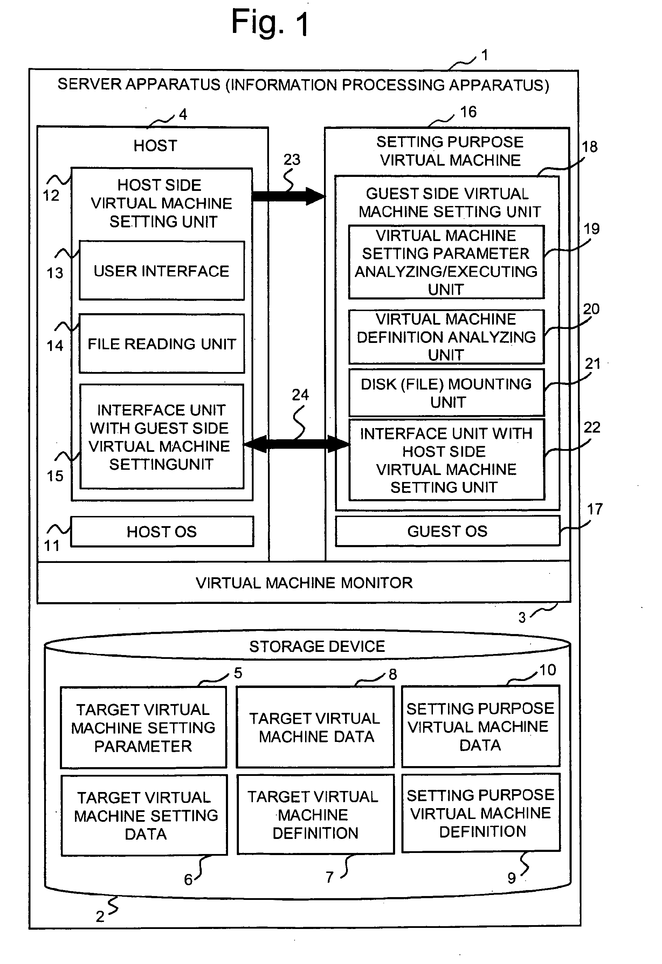

Fig. 1 shows a general configuration example of a server apparatus (1) (an information processing apparatus) related to the present embodiment.
Here, in the following, the server apparatus (1) is also referred to simply as a server (1).
A storage device (2) is included in the server (1), and a virtual machine is managed by a virtual machine monitor (3). Here, an example is shown that a host (4) is operated on the virtual machine monitor (3); however, this embodiment is applicable to an example in which the virtual machine monitor (3) itself includes a function of the host or in which the virtual machine monitor exists on the host OS.
Further, Fig. 1 shows a state after starting the host (4) and a setting purpose virtual machine (16).

A host OS (11) operates on the host (4), and applications of a host side virtual machine setting unit (12) operates on the host (4).
The host side virtual machine setting unit (12) is mainly configured by a user interface (13), a file reading unit (14), and an interface unit with a guest side virtual machine setting unit (15).
Further, the host side virtual machine setting unit (12) requests the virtual machine monitor (3) to start (23) the setting purpose virtual machine (16) using the setting purpose virtual machine definition file (9) and the setting purpose virtual machine data (10).

In the setting purpose virtual machine (16), the guest OS (17) operates, and an applications of a guest side virtual machine setting unit (18) operates on the guest OS (17).
The guest side virtual machine setting unit (18) is mainly configured by a virtual machine setting parameter analyzing/executing unit (19), a virtual machine definition analyzing unit (20), a disk/file mounting unit (21), and an interface unit with the host side virtual machine setting unit (22).
The interface unit with the guest side virtual machine setting unit (15) and the interface unit with the host side virtual machine setting unit (22) are functions to receive/send data between the host side virtual machine setting unit (12) and the guest side virtual machine setting unit (18). For example, they can be implemented by socket communication.

Although a detail will be discussed later, in the present embodiment, without starting the target virtual machine, the guest side virtual machine setting unit (18) of the setting purpose virtual machine (16) requests the host side virtual machine setting unit (12) of the host (4) to obtain the target virtual machine setting parameter file (5) from the storage device (2) through communication with the interface unit with the guest side virtual machine setting unit (15) and the interface unit with the host side virtual machine setting unit (22), the host side virtual machine setting unit (12) obtains the target virtual machine setting parameter file (5) from the storage device (2), and makes a storage area for setting parameters of the target virtual machine accessible from the setting purpose virtual machine (16) (attaching virtual disk for the target virtual machine).
Then, the guest side virtual machine setting unit (18) of the setting purpose virtual machine (16) obtains the setting parameters from the host side virtual machine setting unit (12), writes the setting parameters in the storage area for setting parameters of the target virtual machine (the attached virtual disk for the target virtual machine) which has been made accessible, and thus setting of the parameters of the target virtual machine is done without starting the target virtual machine.

The storage device (2) stores the target virtual machine definition file (7) and the target virtual machine data (8).
The target virtual machine definition file (7) defines a configuration of a virtual hardware (the number of CPUs (Central Processing Units), memory capacity, disk capacity, etc.) of the target virtual machine which is a target for setting parameters.
The target virtual machine data (8) is a file or a disk partition which is an actual body of the virtual disk used by the target virtual machine, and is a storage area in which the parameters of the target virtual machine are written. As will be discussed later, the host side virtual machine setting unit (12) of the host (4) attaches the virtual disk (a target disk) used by the target virtual machine, and the guest side virtual machine setting unit (18) of the setting purpose virtual machine (16) writes the setting parameters in the attached virtual disk (the target disk); in fact, the parameters are written in the target virtual machine data (8) which is a storage area for setting the parameters.

Further, the storage device (2) stores the target virtual machine setting parameter file (5) for setting the target virtual machine. The target virtual machine setting parameter file (6) can be also used separately as a data file to be used by the target virtual machine setting parameter file (5).

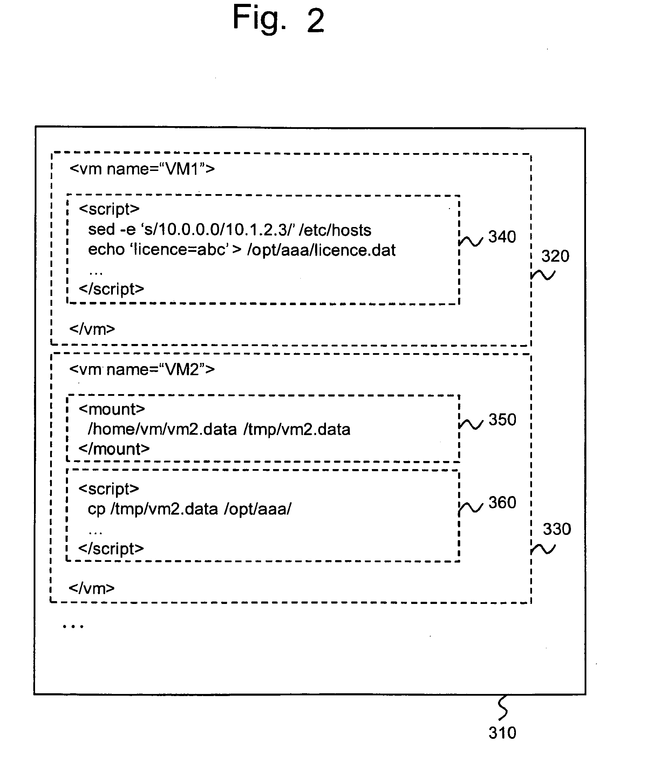

Fig. 2 shows an example of the target virtual machine setting parameter file (5).
This example is written in an XML (Extensible Markup Language) format; however, another format can be used as long as the format can be recognized by the virtual machine setting parameter analyzing/executing unit (19).
Description of a setting file (310) is separated into blocks for each target virtual machine. In this example, two blocks, which are a block for a virtual machine VM1 (320) and a block for a virtual machine VM2 (330), are written.
In each block, a target virtual machine name and setting parameters are written.
In the block for the virtual machine VM1 (320), an execution script (340) is written. In this example, execution command of Linux (registered trademark) is written; however, another format can be used as long as it can be executed by the virtual machine setting parameter analyzing/executing unit (19).
In the guest side virtual machine setting unit (18), the virtual machine setting parameter analyzing/executing unit (19) executes the execution script (340), and thereby the setting parameters are written in the target virtual machine data (8) and the setting of the parameters for the target virtual machine is done.
In the block for the virtual machine VM2 (330), in addition to the execution script (360), a command (350) for mounting data to be used by the execution script is written. The format of this command can be also another format as long as it can be recognized by the virtual machine setting parameter analyzing/executing unit (19).
Data to be mounted (data to be used by the execution script) shown in the command (350) of Fig. 2 is included in the target virtual machine setting parameter file (6) shown in Fig. 1.

Further, the storage device (2) stores the setting purpose virtual machine definition file (9) and the setting purpose virtual machine data (10).
The setting purpose virtual machine definition file (9) and the setting purpose virtual machine data (10) correspond to the target virtual machine definition file (7) and the target virtual machine data (8), respectively.
That is, the setting purpose virtual machine definition file (9) defines a configuration of the virtual hardware (the number of CPUs (Central Processing Units), memory capacity, disk capacity, etc.) of the setting purpose virtual machine (16).
Further, the setting purpose virtual machine data (10) is a file or a disk partition which is an actual body of the virtual disk to be used by the setting purpose virtual machine (16).

Next, an operation flow in the server apparatus (1) related to the present embodiment will be explained using flowcharts.
Figs. 3 and 4 show operation flowcharts of the host side virtual machine setting unit (12), and Figs. 5 and 6 show operation flowcharts of the guest side virtual machine setting unit (18).

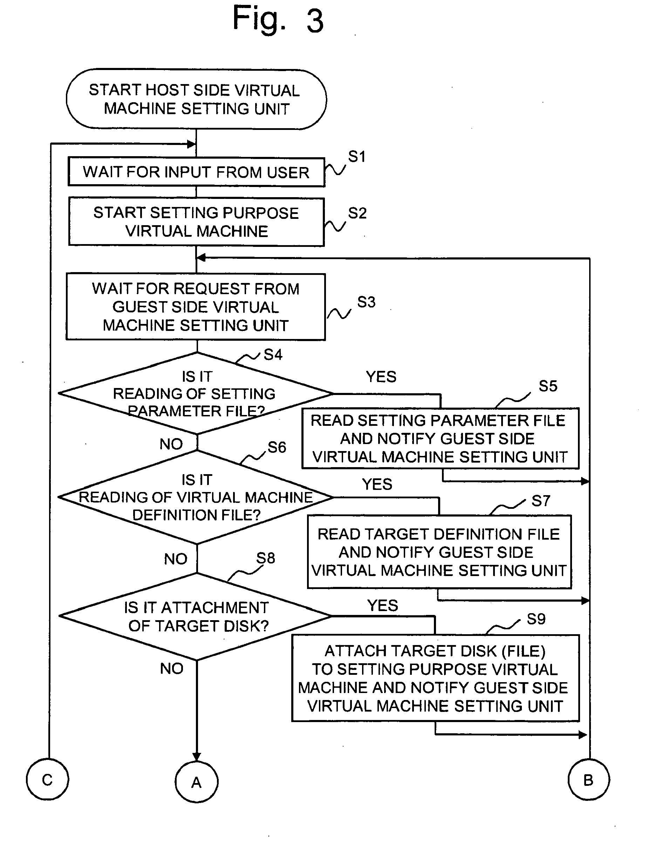

First, for example, a user starts the host side virtual machine setting unit (12) (Fig. 3).
Then, the host side virtual machine setting unit (12) waits for an input from the user (S1).
When setting is requested by the user through the user interface (13), the host side virtual machine setting unit (12) requests the virtual machine monitor (3) to start (23) the setting purpose virtual machine (16) using the setting purpose virtual machine definition file (9) and the setting purpose virtual machine data (10) and starts (S2) the setting purpose virtual machine (16). The starting procedure of the setting purpose virtual machine (16) is the same as the starting procedure of a regular virtual machine, and a detailed explanation will be omitted.

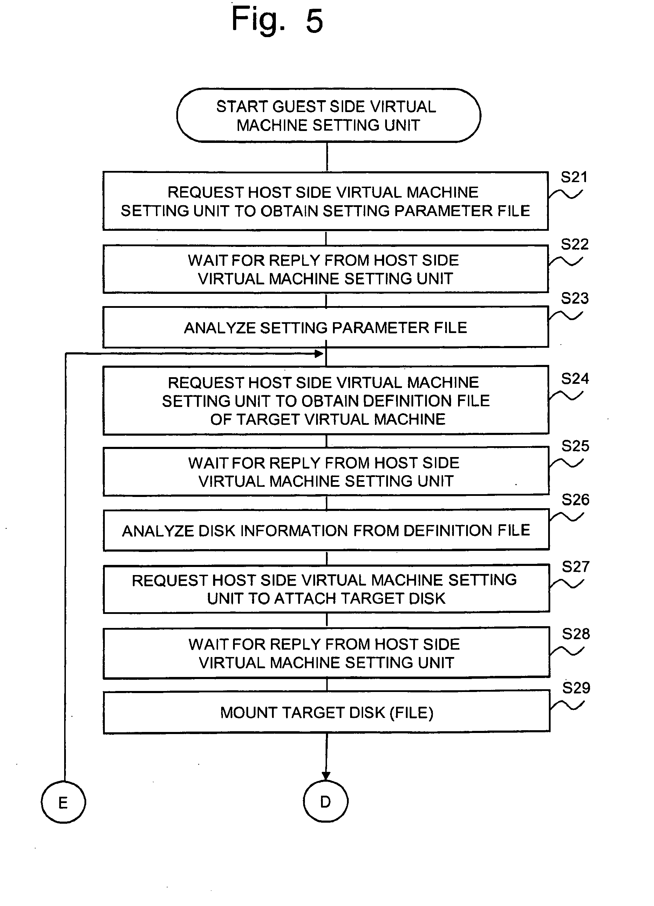

When the setting purpose virtual machine (16) is started, the guest side virtual machine setting unit (18) is started (Fig. 5).
The host side virtual machine setting unit (12) waits for a request from the guest side virtual machine setting unit (18) (S3).

In the guest side virtual machine setting unit (18), the virtual machine setting parameter analyzing/executing unit (19) requests the host side virtual machine setting unit (12) to obtain the setting parameter file through the interface unit with the host side virtual machine setting unit (22) (S21), and waits for reply from the host side virtual machine setting unit (12) (S22).
In the host side virtual machine setting unit (12), the interface unit with the guest side virtual machine setting unit (15) receives the request of reading the setting parameter file from the guest side virtual machine setting unit (18) (S4), the file reading unit (14) reads the target virtual machine setting parameter file (5), and it is notified from the interface unit with the guest side virtual machine setting unit (15) to the guest side virtual machine setting unit (18) (S5).
After notification, the host side virtual machine setting unit (12) waits for request from the guest side virtual machine setting unit (18) (S3).

In the guest side virtual machine setting unit (18), the interface unit with the host side virtual machine setting unit (22) inputs the target virtual machine setting parameter file (5) from the host side virtual machine setting unit (12), the virtual machine setting parameter analyzing/executing unit (19) analyzes the setting parameter file (S23), and one virtual machine to be a target is selected at first. For example, VM1 is selected.
Then, the virtual machine setting parameter analyzing/executing unit (19) requests the host side virtual machine setting unit (12) to obtain the virtual machine definition file for the target virtual machine (VM1, for example) through the interface unit with the host side virtual machine setting unit (22) (S24), and the guest side virtual machine setting unit (18) waits for reply from the host side virtual machine setting unit (12)(S25).

In the host side virtual machine setting unit (12), the interface unit with the guest side virtual machine setting unit (15) receives a request for reading the virtual machine definition file from the guest side virtual machine setting unit (18) (S6), the file reading unit (14) reads the target virtual machine definition file (7), and the interface unit with the guest side virtual machine setting unit (15) notifies the guest side virtual machine setting unit (18) (S7).
After notification, the host side virtual machine setting unit (12) waits for request from the guest side virtual machine setting unit (18) (S3).

In the guest side virtual machine setting unit (18), the interface unit with the host side virtual machine setting unit (22) inputs the target virtual machine definition file (7) from the host side virtual machine setting unit (12), and the virtual machine definition analyzing unit (20) analyzes this definition file (S25).
Next, the virtual machine definition analyzing unit (20) obtains the disk information (a device name, a file name, etc.) from the target virtual machine definition file (7) and requests the host side virtual machine setting unit (12) to attach this disk to the setting purpose virtual machine (16) through the interface unit with the host side virtual machine setting unit (22) (S27).
If plural disks are set in the target virtual machine definition file (7), information for the all disks is notified to the host side virtual machine setting unit (12), and the guest side virtual machine setting unit (18) waits for reply from the host side virtual machine setting unit (12) (S28).
Here, to attach means to enable the virtual machine to mount a disk partition or a file, namely, to enable the guest side virtual machine setting unit (18) to access the disk, in other words, the target virtual machine data (8) which is a storage area for setting parameters of the target virtual machine.

In the host side virtual machine setting unit (12), the interface unit with the guest side virtual machine setting unit (15) receives a request for disk attach from the guest side virtual machine setting unit (18), and the file reading unit (14) attaches the specified target disk or file to the setting purpose virtual machine (16).
Then, the interface unit with the guest side virtual machine setting unit (15) notifies the guest side virtual machine setting unit (18) of the attaching (S9), and waits for reply from the guest side virtual machine setting unit (18) (S3).

In the guest side virtual machine setting unit (18), the notification is received from the host side virtual machine setting unit (12), the disk/file mounting unit (21) mounts the target disk (S29). If plural disks exist, all disks are mounted.
Next, the virtual machine setting parameter analyzing/executing unit (19) analyzes the target virtual machine setting parameter file (5), and checks whether or not the target virtual machine setting data file (6) is necessary (S30).
If the target virtual machine setting data file (6) is necessary (if the command (350) shown in Fig. 2 is included), the guest side virtual machine setting unit (18) requests the host side virtual machine setting unit (12) to attach the target virtual machine setting data file (6) (S31), and the guest side virtual machine setting unit (18) waits for reply from the host side virtual machine setting unit (12) (S32).

In the host side virtual machine setting unit (12), the interface unit with the guest side virtual machine setting unit (15) receives the request for attaching of the target virtual machine setting data file (6) from the guest side virtual machine setting unit (18) (S12), the file reading unit (14) attaches the target virtual machine setting data file (6) to the setting purpose virtual machine (16) (S13), and the interface unit with the guest side virtual machine setting unit (15) notifies the guest side virtual machine setting unit (18) of the attaching.

In the guest side virtual machine setting unit (18), the interface unit with the host side virtual machine setting unit (22) receives the notification from the host side virtual machine setting unit (12), the disk/file mounting unit (21) mounts the target virtual machine setting data file (6) (S33).
Then, the virtual machine setting parameter analyzing/executing unit (19) executes a script of the target virtual machine setting parameter file (5) (S34).
By this operation, the setting parameters are written in the target virtual machine data (8), and the setting of the target virtual machine is done. Further, after executing the script, the virtual machine setting parameter analyzing/executing unit (19) unmounts the target virtual machine setting data file (6) (S35).
Then, the virtual machine setting parameter analyzing/executing unit (19) requests the host side virtual machine setting unit (12) to detach the target virtual machine setting parameter file (6) through the interface unit with the host side virtual machine setting unit (22) (S36), and the guest side virtual machine setting unit (18) waits for reply from the host side virtual machine setting unit (12) (S37).
Here, to detach means to make the attached disk partition or file unable to be accessed from the virtual machine.

In the host side virtual machine setting unit (12), the interface unit with the guest side virtual machine setting unit (15) receives the request for detaching of the target virtual machine setting data file (6) from the guest side virtual machine setting unit (18), the file reading unit (14) detaches the target virtual machine setting data file (6) from the setting purpose virtual machine (16) (S15), and the detaching is notified to the guest side virtual machine setting unit (18).
In the guest side virtual machine setting unit (18), the notification is received from the host side virtual machine setting unit (12), the disk/file mounting unit (21) unmounts the mounted target disk (S39).
Further, the virtual machine setting parameter analyzing/executing unit (19) requests the host side virtual machine setting unit (12) to detach the target disk through the interface unit with the host side virtual machine setting unit (22) (S40), and the guest side virtual machine setting unit (18) waits for reply from the host side virtual machine setting unit (12) (S41).

In the host side virtual machine setting unit (12), the interface unit with the guest side virtual machine setting unit (15) receives the request for detaching of the target disk from the guest side virtual machine setting unit (18) (S10), the file reading unit (14) detaches the target disk from the setting purpose virtual machine (16), and the interface unit with the guest side virtual machine setting unit (15) notifies the guest side virtual machine setting unit (18) of the detaching.

In the guest side virtual machine setting unit (18), the interface unit with the host side virtual machine setting unit (22) receives the notification from the host side virtual machine setting unit (12), the operation proceeds to the next.
If there remains any target virtual machine specified by the target virtual machine setting parameter file (5), the operation is repeated from S24 (S42).
When the setting for the all virtual machines has been completed, completion of setting is notified to the host side virtual machine setting unit (12) (S43), and the operation terminates.
The termination of the setting purpose virtual machine (16) is done by the guest side virtual machine setting unit (18) itself up to shut down of the OS.

In the host side virtual machine setting unit (12), the completion of setting is notified from the guest side virtual machine setting unit (18) (S16), and the completion of setting is notified to the user through the user interface (13) (S17). Then the host side virtual machine setting unit (12) repeats the operation from waiting for an input from the user (S1).

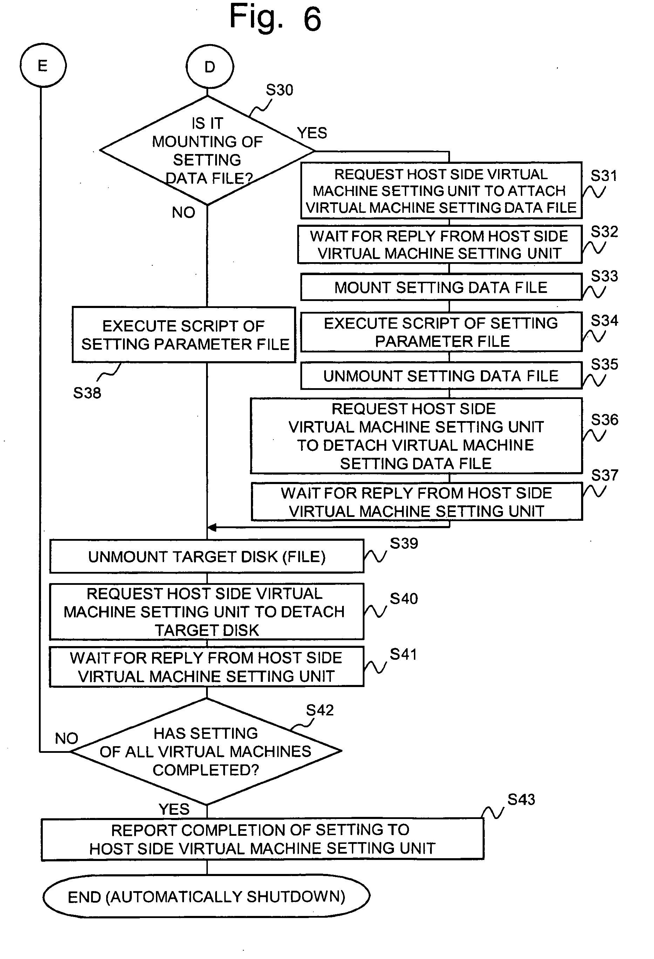

Here, in S30 of Fig. 6, if the target virtual machine setting data file (6) is not necessary, the target virtual machine setting data file (6) is not mounted, and the script of the target virtual machine setting parameter file (5) is executed by the virtual machine setting parameter analyzing/executing unit (19) (S38).

Through the above operation, the setting of the target virtual machine can be done without starting the target virtual machine.
Further, the host side virtual machine setting unit (12) deployed in the host (4) cannot access the target virtual machine data (8) which is the target disk and cannot write the setting data; however, in the present embodiment, by starting the guest side virtual machine setting unit (18) which operates on the setting purpose virtual machine (16), it is possible to access the target virtual machine data (8) which is the target disk from the guest side virtual machine setting unit (18) and write the setting data.

Further, the OS of the setting purpose virtual machine having only minimum functions, reduces the OS starting time; and the setting is done efficiently compared with actually starting the OS of the target virtual machine.
Since the setting can be done before starting the target virtual machine, for example, in case of setting the IP address, it is possible to avoid a problem that an error occurs because of the overlapped IP address when a certain virtual machine is copied to construct a new virtual machine and the new virtual machine starts.
Further, on the occasion when plural virtual machines are set, the target virtual machine data can be mounted/unmounted by the setting purpose virtual machine, and thereby it is unnecessary to restart the setting purpose virtual machine every time when the target virtual machines change, and the efficiency can be improved.
Here, since this method can be implemented without modifying the virtual machine monitor (or the host OS), the method can be applied to a virtual machine software which is commercially available.
Further, since the setting is done by executing the script in which the setting parameters are written, it is unnecessary to prepare a large amount of setting image files.

As discussed above, in the present embodiment, the server apparatus has been explained, which prepares the setting purpose virtual machine separately from the target virtual machine for constructing the virtual machine, in which the disks or files of the target virtual machine are assigned so as to be accessible from the setting purpose virtual machine, and which sets the target virtual machine without starting the target virtual machine.

Further, in the present embodiment, the server apparatus has been explained, which prepares applications for automatically setting in the setting purpose virtual machine, and which automatically sets the target virtual machine.

Here, in the present and subsequent embodiments, the setting purpose virtual machine can be a virtual machine which is specialized for setting the target virtual machine, or a virtual machine which has another function as a main function, having the setting function of the target virtual machine.

Embodiment 2.

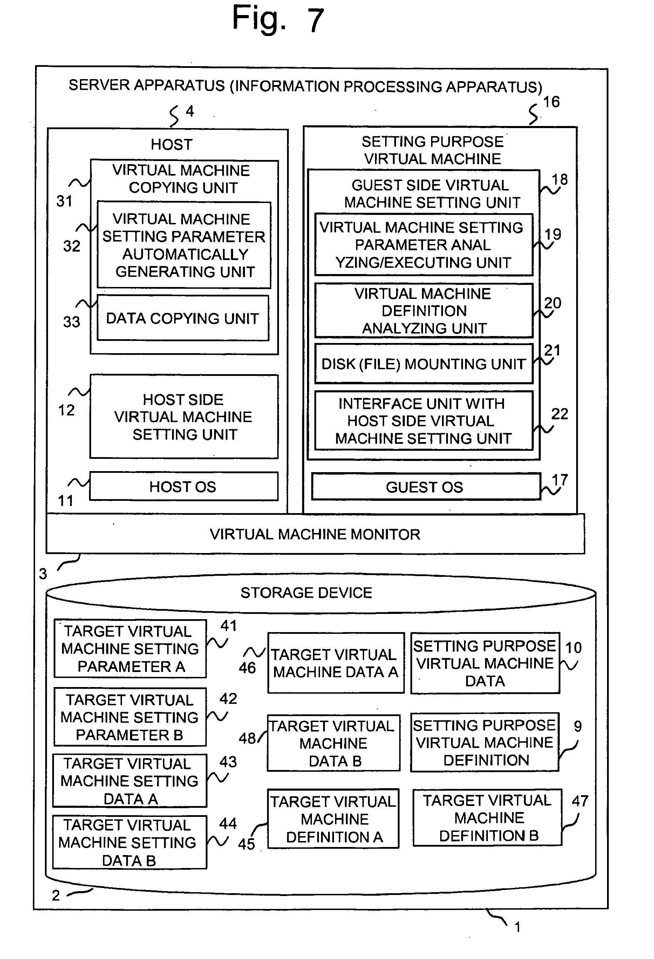

Fig. 7 shows a configuration example of a server apparatus (1) (an information processing apparatus) related to the present embodiment.
Although the server apparatus (1) related to the present embodiment includes a storage device (2), a host (4) and a setting purpose virtual machine (16) as well as the first embodiment, internal configurations of the storage device (2) and the host (4) are different. A detail of the internal configuration of the storage device (2) and the host (4) will be discussed later. Here, a configuration of the setting purpose virtual machine (16) is the same as the first embodiment, and the explanation will be omitted.
Further, as well as Fig. 1, Fig. 7 shows a state after the host (4) and the setting purpose virtual machine (16) are started.

In the present embodiment, the storage device (2) stores a target virtual machine setting parameter, target virtual machine setting data, target virtual machine data, target virtual machine definition for plural virtual machines.
Concretely, a target virtual machine setting parameter A file (41) which is a setting parameter file for a target virtual machine A and a target virtual machine setting parameter B file (42) which is a setting parameter file for a target virtual machine B are stored.
Further, a target virtual machine setting data A file (43) which is a setting data file for the target virtual machine A and a target virtual machine setting data B file (44) which is a setting data file for the target virtual machine B are stored.
Further, a target virtual machine definition A file (45) which defines a virtual hardware configuration of the target virtual machine A and a target virtual machine definition B file (47) which defines a virtual hardware configuration of the target virtual machine B are stored.
Further, a target virtual machine data A file (46) which is a target disk of the target virtual machine A and a target virtual machine data B file (48) which is a target disk of the target virtual machine B are stored.
Here, it is assumed that the target virtual machine A is an original virtual machine to be copied, and the target virtual machine B is a virtual machine copied by the virtual machine copying unit (31) of the host (4).

Here, the target virtual machine setting parameter A file (41) and the target virtual machine setting parameter B file (42) are the same as the target virtual machine setting parameter file (5) shown in Fig. 1.
Further, the target virtual machine setting data A file (43) and the target virtual machine setting data B file (44) are the same as the target virtual machine setting data file (6) shown in Fig. 1.
Further, the target virtual machine definition A file (45) and the target virtual machine definition B file (47) are the same as the target virtual machine definition file (7).
Further, the target virtual machine data A (46) and the target virtual machine data B (48) are the same as the target virtual machine data (8) shown in Fig. 1.
Therefore, detailed explanation will be omitted for each item.
Further, the setting purpose virtual machine definition file (9) and the setting purpose virtual machine data (10) are the same as ones shown in Fig. 1.

The host (4) related to the present embodiment includes a virtual machine copying unit (31) which is an application operating on the host OS (11), in addition to the host OS (11) and the host side virtual machine setting unit (12) which have been shown in the first embodiment.
The virtual machine copying unit (31) copies a virtual machine. In the example of Fig. 7, the target virtual machine A is copied to make a target virtual machine B.
The virtual machine copying unit (31) includes a virtual machine setting parameter automatic generating unit (32) and a data copying unit (33).
The virtual machine setting parameter automatic generating unit (32) generates a target virtual machine setting parameter B file (42) and a target virtual machine setting data B file (44) which are the setting parameter and the setting data of the target virtual machine B which is a copy, from the target virtual machine setting parameter A file (41) and the target virtual machine setting data A file (43) which are the setting parameter and the setting data of the target virtual machine A which is to be copied.
The data copying unit (33) copies the target virtual machine definition A file (45) to generate the target virtual machine definition B file (47).
Further, the data copying unit (33) generates the target virtual machine data B file (48) which has the same configuration as the target virtual machine data A file (46).

Next, an operation of the server apparatus (1) related to the present embodiment will be explained.
First, it is based on the premise that the target virtual machine B is generated as a copy of the target virtual machine A by the virtual machine copying unit (31) of the host (4), and the target virtual machine setting parameter B file (42), the target virtual machine setting data B file (44), the target virtual machine definition B file (47), and the target virtual machine data B (48) are stored in the storage device (2).
Under this state, without starting the target virtual machine B, the guest side virtual machine setting unit (18) of the setting purpose virtual machine (16) requests the host side virtual machine setting unit (12) of the host (4) to obtain the target virtual machine setting parameter B file (42) from the storage device (2), the host side virtual machine setting unit (12) obtains the target virtual machine setting parameter B file (42) from the storage device (2), and makes a storage area for setting parameters of the target virtual machine B accessible from the setting purpose virtual machine (16) (attaches the target virtual machine data B (48)).
Then, the guest side virtual machine setting unit (18) of the setting purpose virtual machine (16) obtains the target virtual machine setting parameter B file (42) from the host side virtual machine setting unit (12), writes the target virtual machine setting parameter B file (42) in the storage area for setting parameters of the target virtual machine B which is made accessible (the attached target virtual machine data B (48)), thereby setting the parameters of the target virtual machine B.
Namely, in the present embodiment, for the copied target virtual machine copied by the virtual machine copying unit (31) of the host (4), it is possible to carry out the setting without starting the copied target virtual machine.
Here, a detail of the operation of the host side virtual machine setting unit (12) and the guest side virtual machine setting unit (18) are the same as ones shown in Figs. 3 to 6, and the explanation will be omitted.

As discussed above, in the present embodiment, the server apparatus has been explained, which automatically copies a virtual machine and does the setting of the copied virtual machine automatically.

Embodiment 3.
In the present embodiment, an example of a load evaluating unit will be shown, which automatically generates plural virtual machines when it is desired to configure a number of virtual machines on one server such as a load test or an evaluation test, etc.
This function is to copy a target virtual machine, and also automatically set items that should be set individually such as a host name, an IP address, etc.

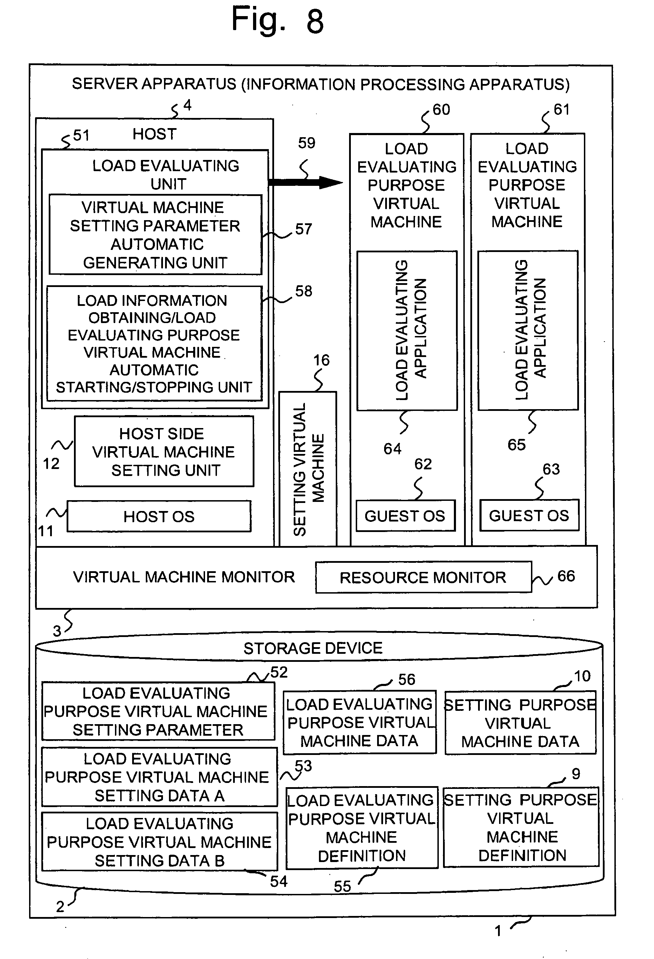

Fig. 8 shows a general configuration of a server apparatus (1) (an information processing apparatus) related to the present embodiment.
In the present embodiment, within the host (4), a load evaluating unit (51) which is an application operating on the host OS (11) is provided, in addition to the host OS (11) and the host side virtual machine setting unit (12) which have been shown in the first embodiment.
The load evaluating unit (51) is configured by a virtual machine setting parameter automatic generating unit (57) and a load information obtaining/load evaluating purpose virtual machine automatic starting/stopping unit (58).
The load evaluating unit (51) requests the virtual machine monitor (3) to start load evaluating purpose virtual machines (60), (61) using the load evaluating purpose virtual machine definition file (55) and the load evaluating purpose virtual machine data (56).
Fig. 8 shows two load evaluating purpose virtual machines; however, two or more virtual machines can operate.
Here, a load evaluating purpose virtual machine setting parameter file (52), the load evaluating purpose virtual machine setting data files (53), (54) in the storage device (2) are files generated by the virtual machine setting parameter automatic generating unit (57).
An example of this drawing shows two files of the load evaluating purpose virtual machine setting data A file (53) and the load evaluating purpose virtual machine setting data B file (54).
The virtual machine setting parameter automatic generating unit (57) related to the present embodiment is the same as the virtual machine setting parameter automatic generating unit (32) which has been shown in the second embodiment.

The load evaluating purpose virtual machines (60), (61) are configured by guest OSs (62), (63) and load evaluating applications (64), (65).

Further, within the virtual machine monitor (3), a resource monitor (66) is provided for monitoring usage rate or performance information of hardware resource such as a CPU usage rate or a memory usage rate.
Internal configurations of the host side virtual machine setting unit (12) and the setting purpose virtual machine (16) are the same as ones shown in Fig. 1, and they are omitted.

In the present embodiment, the load evaluating purpose virtual machines (60), (61) carry out a processing for applying a load on the hardware resource such as the CPU or memories of the server apparatus (1).
Then, the resource monitor (66) monitors the load on the hardware resource caused by the processing of the load evaluating purpose virtual machines (60), (61).
Further, the load evaluating unit (51) within the host (4) compares a monitored value by the resource monitor (66) with a threshold value; if the monitored value is equal to or less than the threshold value, the load evaluating unit (51) starts a new load evaluating purpose virtual machine, and if the monitored value exceeds the threshold value, the load evaluating unit (51) determines an operable limit number of the virtual machines based on the current number of operations of the load evaluating purpose virtual machine.

As for the operation of the load evaluating unit (51), an example will be explained, in which the operable limit number of the virtual machines which are executable by the server apparatus (1) is obtained.
Whether the virtual machine is executable or not is determined such that if the CPU usage rate and the memory usage rate of the whole server (1) are equal to or less than a certain specified value, it is determined to be executable.

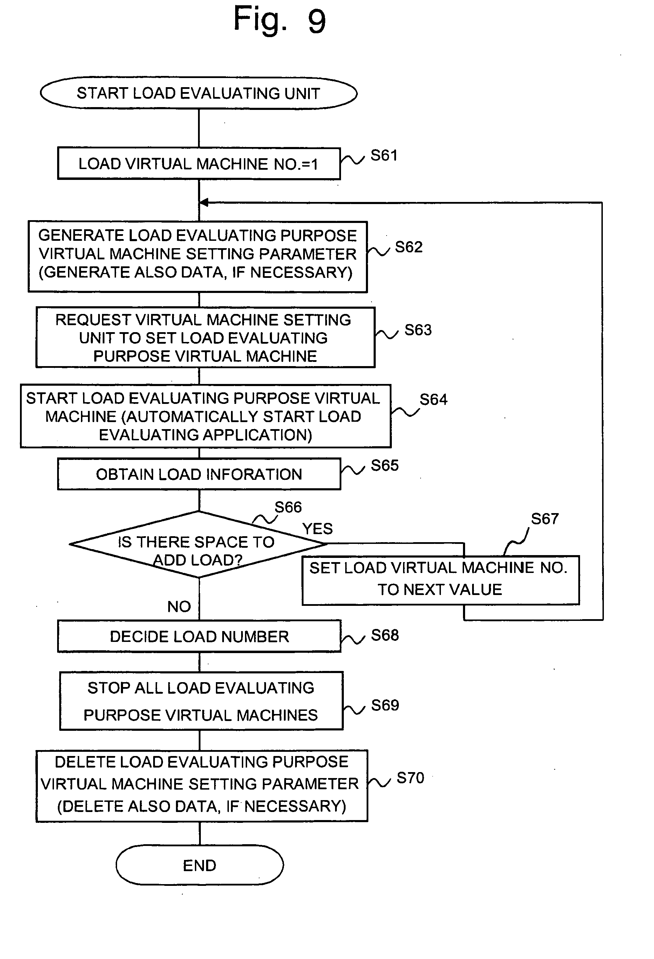

Fig. 9 shows an operational flowchart of the load evaluating unit (51).
Here, the operation which has been explained in the first embodiment is the same, so that detailed explanation will be omitted.
First, the load information obtaining/load evaluating purpose virtual machine automatic starting/stopping unit (58) sets a load virtual machine No. variable to 1 (S61). This load virtual machine No. variable is a variable for counting the operable limit number of the virtual machines.
Next, the virtual machine setting parameter automatic generating unit (57) generates the load evaluating purpose virtual machine setting parameter file (52), a load evaluating purpose virtual machine definition file (not illustrated), and load evaluating purpose virtual machine data (not illustrated) for the load virtual machine No. = 1 (S62). The load evaluating purpose virtual machine definition file for the case of No. = 1 is generated by copying the load evaluating purpose virtual machine definition file (55). The load evaluating purpose virtual machine data for No. = 1 is generated by copying the load evaluating purpose virtual machine data (56). At this time, the load evaluating purpose virtual machine setting data files (53), (54) are also generated, if necessary.
The load information obtaining/load evaluating purpose virtual machine automatic starting/stopping unit (58) requests the host side virtual machine setting unit (12) to set the load evaluating purpose virtual machine (60) using the generated load evaluating purpose virtual machine setting parameter file (53) (S63).
The host side virtual machine setting unit (12) carries out the setting of the load evaluating purpose virtual machine (60).
The setting of the load evaluating purpose virtual machine (60) is carried out in the procedure shown in the first embodiment in which the host side virtual machine setting unit (12) starts the setting purpose virtual machine (16), and then the host side virtual machine setting unit (12) and the guest side virtual machine setting unit (18) of the setting purpose virtual machine (16) cooperate.

After the setting is completed, the load information obtaining/load evaluating purpose virtual machine automatic starting/stopping unit (58) of the load evaluating unit (51) requests the virtual machine monitor (3) to start the load evaluating purpose virtual machine (60).
When the load evaluating purpose virtual machine (60) is started (S64), the load evaluating application (64) is automatically started, and the processing to add load on the CPU and the memory is executed.
The resource monitor (66) monitors the CPU usage rate and the memory usage rate by the processing of the load evaluating purpose virtual machine (60).
The load information obtaining/load evaluating purpose virtual machine automatic starting/stopping unit (58) of the load evaluating unit (51) obtains the CPU usage rate and the memory usage rate (the monitored value) from the resource monitor (66)(S65).
Then, if both of the obtained CPU usage rate and the memory usage rate are smaller than predetermined threshold values, it is determined that there remains capacity to add load (YES at S66), and the load information obtaining/load evaluating purpose virtual machine automatic starting/stopping unit (58) sets the load virtual machine No. to the next value (S67), and repeats the operation from S62.
If at least either of the CPU usage rate and the memory usage rate is equal to or greater than the predetermined threshold value, which shows a state where there remains no capacity to add load (NO at S66), the load information obtaining/load evaluating purpose virtual machine automatic starting/stopping unit (58) determines that this is the limit and decides the load number (the virtual machine operable limit number) (S68).
The number obtained by subtracting 1 from the currently operating number of load evaluating purpose virtual machines (the load virtual machine No. variable) is the number of executable virtual machines on the server, that is, the virtual machine operable limit number.
After the load number is decided, the load information obtaining/load evaluating purpose virtual machine automatic starting/stopping unit (58) stops all the load evaluating purpose virtual machines (60), (61) (S69), and deletes the load evaluating purpose virtual machine setting parameter file (52), the load evaluating purpose virtual machine setting data files (53), (54), the load evaluating purpose virtual machine definition file (not illustrated), and the load evaluating purpose virtual machine data file (not illustrated) generated at S62, and terminates the process.
Through the above method, the evaluation of the load of the virtual machine can be carries out.

Like the above, in the present embodiment, the server apparatus has been explained, which can automatically carry out the load evaluation of the virtual machine and adjustment of the load.

Embodiment 4.
The first through third embodiments have shown methods for cases where the host cannot directly mount the target virtual machine data; another case will be shown, in which the format of the target virtual machine data (8) is a format mountable from the host side. In this case, the setting purpose virtual machine is not used, the guest side virtual machine setting unit (18) is also provided within the host (4), and thereby it is possible to implement by the same processing.

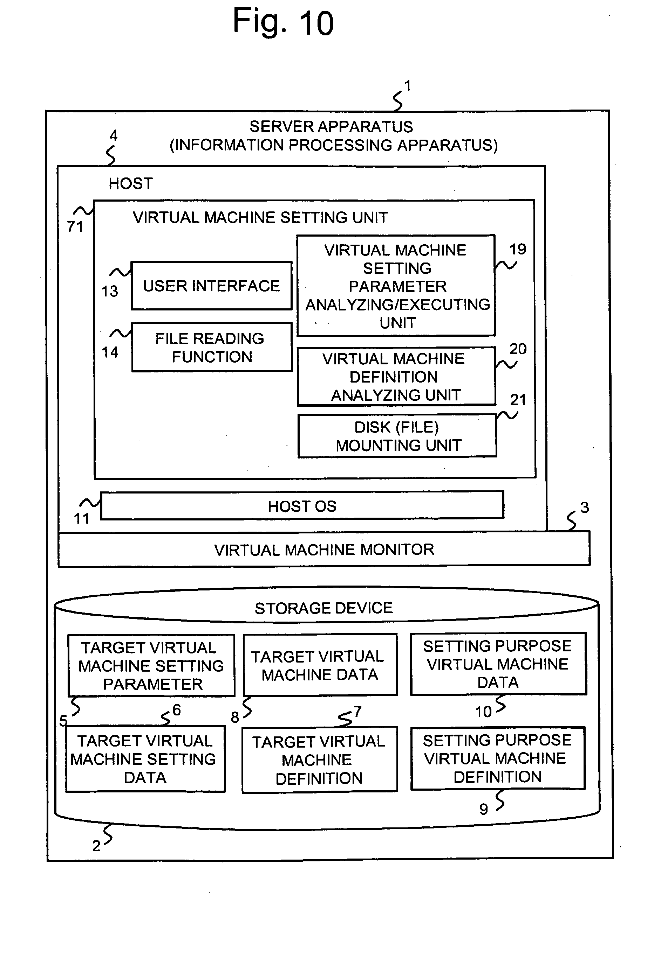

Fig. 10 shows a general configuration example of a server apparatus (1) (an information processing apparatus) related to the present embodiment.
The host OS (11) operates on the host (4), and applications of a virtual machine setting unit (71) operate on that.
The virtual machine setting unit (71) is configured mainly by the user interface (13), the file reading unit (14), the virtual machine setting parameter analyzing/executing unit (19), the virtual machine definition analyzing unit (20), and the disk/file mounting unit (21). These 13, 14, 19, 20, and 21 are the same configuration as the first embodiment. Further, the inside of the storage device (2) is the same as the first embodiment.

Next the operational flow in the server related to the present embodiment will be explained using flowcharts.

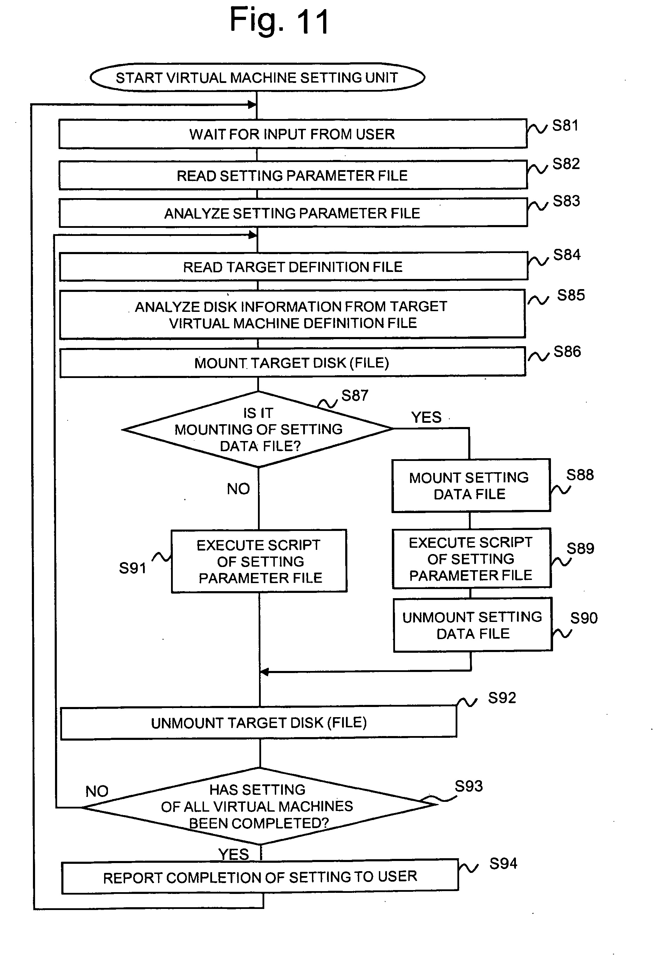

Fig. 11 is an operational flowchart of the virtual machine setting unit (71).
First, for example, the user starts the virtual machine setting unit (71) (Fig. 11).
Then, the virtual machine setting unit (71) waits for an input from the user (S81).
When the setting is requested by the user through the user interface (13), in the virtual machine setting unit (71), the file reading unit (14) reads the target virtual machine setting parameter file (5) (S82), the virtual machine setting parameter analyzing/executing unit (19) analyzes the setting parameter file (S83) and selects one virtual machine which becomes a target. For example, VM1 is selected. The file reading unit (14) reads the target virtual machine definition file (7) for the selected virtual machine, and the virtual machine definition analyzing unit (20) analyzes this definition file (S85).
The disk/file mounting unit (21) mounts a target disk (S86). If there exist plural disks, all disks are mounted.
Next, the virtual machine setting parameter analyzing/executing unit (19) analyzes the target virtual machine setting parameter file (5), and checks whether or not the target virtual machine setting data file (6) is necessary (S87).
If the target virtual machine setting data file (6) is necessary (if the command (350) shown in Fig. 2 is included), the disk/file mounting unit (21) mounts the target virtual machine setting data file (6) (S88).
Then, the virtual machine setting parameter analyzing/executing unit (19) executes the script of the target virtual machine setting parameter file (5) (S89).
By this operation, the setting parameters are written in the target virtual machine data (8), and the setting of the target virtual machine is carried out. After executing the script, the virtual machine setting parameter analyzing/executing unit (19) unmounts the target virtual machine setting data file (6) (S90).
Then, the disk/file mounting unit (21) unmounts the mounted target disk (S92).
If there remains the target virtual machine specified by the target virtual machine setting parameter file (5), the processing repeats from S84 (S93).
After the setting of the all virtual machines has been completed, the virtual machine setting unit (71) reports the completion of the setting to the user through the user interface (13) (S94). Then, the processing repeats from the waiting for the input from the user (S81).
Here, at S87 in Fig. 11, if the target virtual machine setting data file (6) is unnecessary, the target virtual machine setting data file (6) is not mounted, and the virtual machine setting parameter analyzing/executing unit (19) executes the script of the target virtual machine setting parameter file (5) (S91).

Though the above processing, the setting of the target virtual machine can be done without starting the target virtual machine.
The OS of the target virtual machine is not started, so that the setting can be done efficiently.
Further, since the setting can be done before starting the target virtual machine, for example, in case of setting the IP address, it is possible to avoid a problem that an error occurs because of the overlapped IP address when a certain virtual machine is copied to construct a new virtual machine, and the new virtual machine starts.
Here, since the present method can be implemented without modifying the virtual machine monitor (or the host OS), the method can be applied to a virtual machine software which is commercially available.
Further, since the setting is done by executing the script in which the setting parameters are written, it is unnecessary to prepare a number of setting image files.

As has been discussed, in the present embodiment, the server apparatus has been explained, in which the host assigns the disks or files of the target virtual machine to be accessible from the setting purpose virtual machine, and which carries out the setting of the target virtual machine without starting the target virtual machine, when the format of the target virtual machine data is the format mountable by the host side.
Further, in the present embodiment, the server apparatus has been explained, which prepares applications for automatically setting in the setting purpose virtual machine and automatically carries out the setting of the target virtual machine.

Finally, a configuration example of hardware for the server apparatus (1) which has been shown in the first through fourth embodiments.

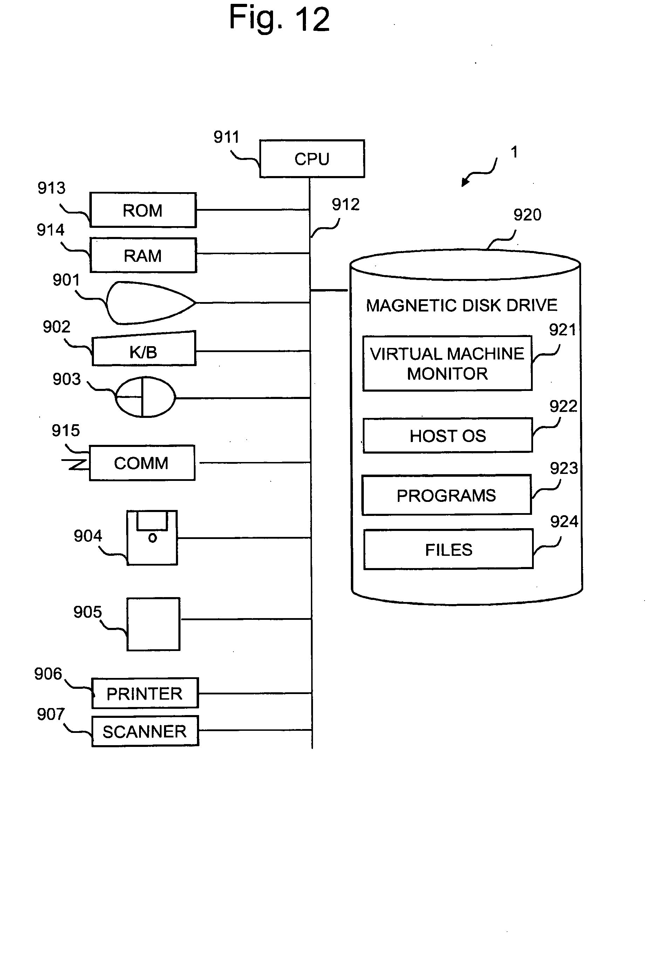

Fig. 12 shows an example of hardware resource for the server apparatus (1) which has been shown in the first through fourth embodiments.
Here, the configuration shown in Fig. 12 is merely an example of the hardware configuration; the hardware configuration of the server apparatus (1) is not limited to the configuration shown in Fig. 12, but can be another configuration.

In Fig. 12, the server apparatus (1) includes a CPU (911) (Central Processing Unit; also called as a central processing unit, a processing unit, an operation unit, a microprocessor, a microcomputer, a processor) for executing the programs.
The CPU (911) is connected through a bus (912) to, for example, a ROM (Read Only Memory) (913), a RAM (Random Access Memory) (914), a communication board (915), a display device (901), a keyboard (902), a mouse (903), a magnetic disk drive (920), and controls these hardware devices.
Further, the CPU (911) can be connected to a FDD (904) (Flexible Disk Drive), a compact disk drive (905) (CDD), a printer device (906), or a scanner device (907). Further, the magnetic disk drive (920) can be replaced with storage devices such as an optical disk drive, a memory card (registered trademark) reader/writer, etc.
The RAM (914) is an example of a volatile memory. Storage medium of the ROM (913), the FDD (904), the compact disk drive (905) (CDD), or the magnetic disk drive (920) is an example of non-volatile memory. These are examples of the storage device.
The communication board (915), the keyboard (902), the mouse (903), the scanner (907), or the FDD (904), etc. is an example of the inputting unit or the inputting device.
Further, the communication board (915), the displaying unit (901), or the printer device (906), etc. is an example of the outputting unit or the outputting device.

The communication board (915) is connected to the network. For example, the communication board (915) is connected to a LAN (local area network), the Internet, a WAN (wide area network), etc.

The magnetic disk drive (920) stores a virtual machine monitor (921), a host OS (922), programs (923), and files (924).
Each program of the programs (923) is executed by the CPU (911), the virtual machine monitor (921), or the host OS (922).
Further, as discussed above, the virtual machine monitor (921) itself sometimes includes a function of the host OS (922), or the virtual machine monitor (921) sometimes exists inside of the host OS (922).

The ROM (913) stores BIOS (Basic Input Output System) programs, and the magnetic disk drive (920) stores boot programs.
At the time of starting the server apparatus (1), the BIOS programs of the ROM (913) and the boot programs of the magnetic disk drive (920) are executed, and the virtual machine monitor (921) and the host OS (922) are started by the BIOS programs and the boot programs.

The programs (923) include programs for implementing the target virtual machine, the setting purpose virtual machine, the load evaluating purpose virtual machine, the host side virtual machine setting unit, the virtual machine copying unit, the load evaluating unit, and internal components of these units.
Further, the files (924) include the target virtual machine setting parameter files, the target virtual machine setting data files, the target virtual machine data, the target virtual machine definition files, etc. which have been shown in the first to third embodiments.

In addition, the files (924) store information, data, signal values, parameters, etc. which have been explained as "determination of --", "calculation of --", "comparison of --", "evaluation of --", "update of --", "setting of --", "selection of --", etc. in the explanation of the first to fourth embodiments are stored as each item of "-- file" or "-- database".
"-- file" or "-- database" is stored in recording media such as disks or memories. The information, data, signal values, variable values, parameters stored in the storage media such as disks or memories are read by the CPU (911) through a reading/writing circuit to a main memory or a cache memory, and they are used for the operation of the CPU such as extraction, search, reference, comparison, operation, calculation, processing, edition, output, printing, displaying, etc.
During the operation of the CPU such as extraction, search, reference, comparison, operation, calculation, processing, edition, output, printing, displaying, the information, data, signal values, variable values, or parameters are temporarily stored in the main memory, a register, the cache memory, a buffer memory, etc.
Further, arrows in flowcharts explained in the first to third embodiments mainly show inputs and outputs of data or signals; the data or signal values are stored in the recording media such as the memory of the RAM (914), a flexible disk of the FDD (904), a compact disk of the CDD (905), a magnetic disk of the magnetic disk drive (920), and others such as an optical disk, a mini-disk, a DVD, etc. Further, the data or signals are transmitted on-line by a bus (912), signal lines, cables, and other transmission media.

Further, components explained as "-- unit" in the first to fourth embodiments can be "-- circuit", "-- device", or "-- equipment", and further can be "-- step", "-- procedure", or "-- processing". Namely, components explained as "-- unit" can be implemented by firmware stored in the ROM (913). Or they can be carried out by only software, only hardware such as elements, devices, boards, wirings, etc., or a combination of software and hardware, or further a combination with firmware. The firmware and software are stored in the recording media such as the magnetic disk, the flexible disk, the optical disk, the compact disk, the mini-disk, the DVD, etc. as programs. The programs are read by the CPU (911) and executed by the CPU (911). Namely, the programs are to function a computer as "-- unit" of the first to fourth embodiments. Or, they make a computer execute the procedures or methods of "-- unit" in the first to fourth embodiments.

Like this, the server apparatus (1) shown in the first to fourth embodiment is a computer having the CPU as the processing device, the memory device, and the magnetic disk, etc. as the storage device, the keyboard, the mouse, the communication board, etc. being the inputting device, the display device and the communication board, etc. as the outputting device; and as discussed above, the server apparatus implements the functions shown as "-- unit" using the processing device, the storage device, the inputting device, or the outputting device.

### Brief Explanation of the Drawings

[Fig. 1] Fig. 1 shows a configuration example of a server apparatus according to the first embodiment.
[Fig. 2] Fig. 2 shows an example of target virtual machine setting parameters according to the first embodiment.
[Fig. 3] Fig. 3 is a flowchart showing an operation example of a host side virtual machine setting unit according to the first embodiment.

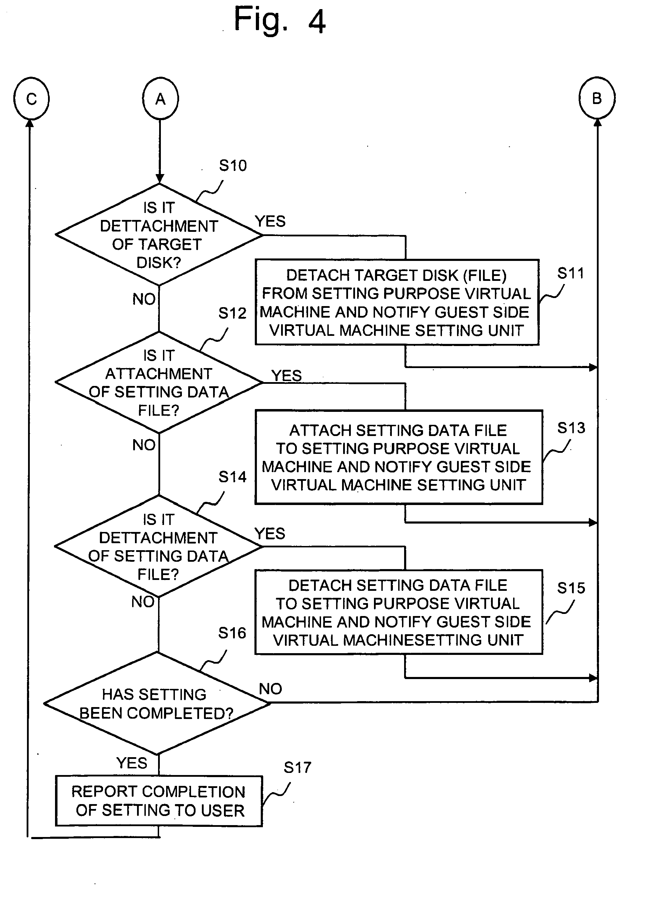

[Fig. 4] Fig. 4 is a flowchart showing the operation example of the host side virtual machine setting unit according to the first embodiment.
[Fig. 5] Fig. 5 is a flowchart showing an operation example of a guest side virtual machine setting unit according to the first embodiment.
[Fig. 6] Fig. 6 is a flowchart showing the operation example of the guest side virtual machine setting unit according to the first embodiment.
[Fig. 7] Fig. 7 shows a configuration example of a server apparatus according to the second embodiment.
[Fig. 8] Fig. 8 shows a configuration example of a server apparatus according to the third embodiment.
[Fig. 9] Fig. 9 is a flowchart showing an operation example of a load evaluating unit according to the third embodiment.
[Fig. 10]Fig. 10 shows a configuration example of a server apparatus according to the fourth embodiment.
[Fig. 11] Fig. 11 is a flowchart showing an operation example of a virtual machine setting unit according to the fourth embodiment.
[Fig. 12]Fig. 12 shows a hardware configuration example of the server apparatus according to the first through fourth embodiments.

### Explanation of Signs

1: a server apparatus; 2: a storage device; 3: a virtual machine monitor; 4: a host; 5: a target virtual machine setting parameter file; 6: a target virtual machine setting data file; 7: a target virtual machine definition file; 8: target virtual machine data: 9: a setting purpose virtual machine definition file; 10: setting purpose virtual machine data; 11: a host OS; 12: a host side virtual machine setting unit; 13: a user interface; 14: a file reading unit; 15: an interface unit with a guest side virtual machine setting unit; 16: a setting purpose virtual machine; 17: a guest OS; 18: a guest side virtual machine setting unit; 19: a virtual machine setting parameter analyzing/executing unit; 20: a virtual machine definition analyzing unit; 21: a disk/file mounting unit; 22: an interface unit with the host side virtual machine setting unit; 31: a virtual machine copying unit; 32: a virtual machine setting parameter automatic generating unit; 33: a data copying unit; 41: a target virtual machine setting parameter A file; 42: a target virtual machine setting parameter B file; 43: a target virtual machine setting data A file; 44: a target virtual machine setting data B file; 45: a target virtual machine definition A file; 46: a target virtual machine data A; 47: a target virtual machine definition B file; 48: a target virtual machine data B; 51: a load evaluating unit; 57: a virtual machine setting parameter automatic generating unit; 58: a load information obtaining/load evaluating purpose virtual machine automatic starting/stopping unit; 60: a load evaluating purpose virtual machine; 61: a load evaluating purpose virtual machine; 62: a guest OS; 63: a guest OS; 64: a load evaluating application; 65: a load evaluating application; 66: a resource monitor; and 71: a virtual machine setting unit.

## Claims

1. An information processing apparatus setting a parameter of a virtual machine comprising:
a storage device storing a setting parameter to be set for a target virtual machine which is a target for setting the parameter and having a storage area for setting the parameter of the target virtual machine;
a host having a host OS (Operating System) and a host side virtual machine setting unit which operates on the host OS; and:
a setting purpose virtual machine, being a virtual machine different from the target virtual machine, having a guest OS and a guest side virtual machine setting unit which operates on the guest OS,
wherein without starting the target virtual machine,
the host side virtual machine setting unit of the host obtains the setting parameter from the storage device, and makes the storage area for setting the parameter of the target virtual machine accessible from the setting purpose virtual machine, and
the guest side virtual machine setting unit of the setting purpose virtual machine obtains the setting parameter from the host side virtual machine setting unit of the host, writes the setting parameter in the storage area for setting the parameter of the target virtual machine which has been made accessible by the host side virtual machine setting unit of the host, and sets the parameter of the target virtual machine.

2. The information processing apparatus of claim 1,
wherein the storage device stores a script in which the setting parameter is written,
wherein the guest side virtual machine setting unit of the setting purpose virtual machine obtains the script from the host side virtual machine setting unit of the host, executes the script, and writes the setting parameter in the storage area for setting the parameter of the target virtual machine.

3. The information processing apparatus of claim 1 or 2 further comprising:
a virtual machine copying unit for copying the virtual machine;
wherein the storage device stores a setting parameter to be set for a copied target virtual machine copied by the virtual machine copying unit and has a storage area for setting the parameter of the copied target virtual machine;
wherein without starting the copied target virtual machine,
the host side virtual machine setting unit of the host obtains the setting parameter of the copied target virtual machine from the storage device, and makes the storage area for setting the parameter of the copied target virtual machine accessible from the setting purpose virtual machine, and
the guest side virtual machine setting unit of the setting purpose virtual machine obtains the setting parameter of the copied target virtual machine from the host side virtual machine setting unit of the host, writes the setting parameter in the storage area for setting the parameter of the copied target virtual machine which has been made accessible by the host side virtual machine setting unit of the host, and sets the parameter of the copied target virtual machine.

4. The information processing apparatus of one of claims 1 to 3 further comprising:
a load evaluating purpose virtual machine for carrying out a processing to apply a load to a hardware resource;
a resource monitor for monitoring the load applied to the hardware resource by the processing of the load evaluating purpose virtual machine; and
a load evaluating unit for comparing a monitored value by the resource monitor with a threshold value, if the monitored value is equal to or less than the threshold value, starting a new load evaluating purpose virtual machine, and if the monitored value exceeds the threshold value, deciding a virtual machine operable limit number based on a number of currently operating load evaluating purpose virtual machine.

5. An information processing apparatus setting a parameter of a virtual machine comprising:
a storage device storing a setting parameter to be set for a target virtual machine which is a target for setting the parameter and having a storage area for setting the parameter of the target virtual machine; and
a host having a host OS (Operating System) and a virtual machine setting unit operating on the host OS,
wherein without starting the target virtual machine,
the virtual machine setting unit of the host obtains the setting parameter from the storage device, makes the storage area for setting the parameter of the target virtual machine accessible, writes the setting parameter in the storage area for setting the parameter of the target virtual machine which has been made accessible, and sets the parameter for the target virtual machine.
